# EUROPÄISCHE PATENTANMELDUNG

(11) **EP 1 208 935 A1**
(43) Veröffentlichungstag der Anmeldung: **29.05.2002**
(21) Anmeldenummer: 01108539.6
(22) Anmeldetag: 05.04.2001
(51) Int. Cl.: B23K 26/20, B23K 26/42

(54) **Unterlage für Blech**

(30) Priorität: 21.11.2000 EP 00125473
(71) Anmelder: MEIKO Maschinenbau GmbH & Co., 77610 Offenburg (DE)
(72) Erfinder: Nöst, Franz, 77652 Offenburg (DE); Döhring, Frank, 77654 Offenburg (DE); Bohnert, Richard, 77704 Oberkirch (DE); Straub, Konrad, 77887 Sasbachwalden (DE); Kiefer, Rolf, 77694 Kehl-Kork (DE); Benz, Karl-Martin, 77797 Ohlsbach (DE); Armbruster, Horst, 77654 Offenburhg (DE); Kolb, Stefan, 77656 Offenburg (DE)
(74) Vertreter: Baumann, Eduard, Dipl.-Phys.

(57) **Zusammenfassung**

Die Erfindung bezieht sich auf eine Unterlage (10) für Bleche (100), das durch ein über dem Blech angeordnetes und auf das Blech fokussiertes Lasergerät (200) durchtrennt wird, mit Bewegungseinrichtungen zwischen Lasergerät und Blech beziehungsweise Unterlage. Die Unterlage besteht im wesentlichen aus senkrecht befestigten parallelen Reihen von gleichen schmalen Blechstreifen (12), welche jeweils zwischen vertieften Furchen (20) erhöhte integrierte Auflagebereiche (22) für das Blech (100) aufweisen.

Um die Lebensdauer der Blechstreifen und damit der Unterlage zu erhöhen, und um gleichzeitig eine Beschädigung der Blechunterseite zu verhindern, werden auf die integrierten Auflagebereiche (22) der Blechstreifen (12) Nadeln (24) aufgesetzt, deren freie Enden die Auflagepunkte (26) für das aufgelegt Blech (100) bilden. Die Nadeln (24) bestehen aus erheblich temperaturbeständigerem Material als die übrige Unterlage.

## Beschreibung

Die Erfindung bezieht sich auf eine Unterlage für Blech, das durch ein über dem Blech angeordnetes und auf das Blech fokussiertes Lasergerät durchtrennt wird, gemäß dem Oberbegriff des Anspruches 1.

Hierbei sind zwischen Lasergerät und Blech beziehungsweise Unterlage Bewegungseinrichtungen vorgesehen, so daß das Lasergerät über die gewünschten Schnittstellen geführt werden kann. Hierbei kann es sich um gerade, um kurvenförmige Schnitte, oder auch um Quasi-Bohrungen durch rundes Ausschneiden handeln.

Die gleiche Problematik besteht auch bei anderen Geräten, bei denen über Wärmeentwicklung Schweiß- oder Schneidevorgänge ausgelöst werden, die auf die Unterseite des Bleches und damit auf die Unterlage für das Blech Auswirkungen haben.

Bei einer möglichen Version ist das Lasergerät ortsfest und das Blech wird über entsprechende Auflager entsprechend den gewünschten Ausschnitten in zwei senkrecht zueinanderstehenden Richtungen bewegt. Hierbei ist unterhalb des Lasergerätes ein Spalt vorgesehen, so daß Beschädigungen der Unterlage oder Verunreinigungen der Blechunterseite vermieden werden. Das Bewegen schwerer Massen mit erwünschter hoher Geschwindigkeit führt jedoch zu Ungenauigkeiten. Bevorzugt wird daher eher das Bewegen des verhältnismäßig leichten Lasergerätes oberhalb einer ortsfesten Blechunterlage. Insbesondere hier ergibt sich jedoch das Problem, daß der Laserstrahl auch die Unterlage des Bleches beeinträchtigt, so daß nach verhältnismäßig kurzer Zeit eine Vielzahl von geschmolzenen Blechpartikeln durch Funkenschlag etc. haften bleiben. Die auf die Blechunterseite auftreffenden geschmolzenen Blechteile müssen mühsam mit nachfolgenden Verfahren entfernt werden. Auch die Unterlage selbst ist üblicherweise nur kurze Zeit temperaturbeständig, was zu Anschmelzungen derselben und verhältnismäßig kurzer Lebensdauer führt. Die Verwendung hochtemperaturfesten Materiales scheidet aus Kostengründen aus.

Zur Verminderung der geschilderten Probleme wurden z. B. durch die Schweizer Firma Bystronic Unterlagen für Blech hergestellt, die im wesentlichen aus senkrecht befestigten parallelen Reihen von gleichen schmalen Blechstreifen bestehen, welche jeweils zwischen vertieften Furchen erhöhte integrierte Auflagebereiche für das Blech aufweisen. Das in die vertieften Furchen fallende geschmolzene Material richtet dadurch verhältnismäßig wenig Schaden an. Dennoch bleiben insbesondere die Auflagebereiche eine Problemzone, welche zu verringerter Lebensdauer und Verunreinigungen der Blechunterseite führen. Auch verschiedene Abhilfemaßnahmen, wie eine Rollenausbildung der Auflagebereiche der Unterlage für das Blech waren nicht voll zufriedenstellend.

In der DE 44 46 975 A1 ist ein Auflagerost für Werkstücke beschrieben, der beispielsweise aus Stützstiften bestehen kann, die an unteren nebeneinandergereihten Balken gelagert werden können. Diese Stützstifte sind verhältnismäßig breit und kegelförmig, so dass die Gefahr besteht, dass durch das Blech hindurch durch den Laser aufgesprühtes Blechmaterial von unten auf die Unterseite des Bleches reflektiert wird. Die Stützstifte halten beim Zusammentreffen mit einem Laserstrahl-Schneidepunkt der Hitzeeinwirkung nicht stand und haben entsprechend kurze Lebensdauer. Der Laser-Bearbeitungs-kopf ist nur in einer einzigen geraden Linie bewegbar, in einer um 90° versetzten Richtung ist eine entsprechende geradlinige Bewegung der Tischunterlage vorgesehen, das Schneiden selbst findet an einem einzigen Schneideort statt. Die Erfindung betrifft insbesondere ein Herabfallen von höchstens an einem oder zwei Punkten gelagerten Blechstücken und den Abtransport derselben. Beim Durchschneiden des letzten Punktes des auszuschneidenden Blechteiles kippt dieses nach unten und verursacht eine unsaubere Schneidefläche an diesem Endabschnitt, was zu einer Qualitätseinbuße und zu einer Nachbehandlung führt.

Die JP 63-52 790 A, Patent Abstracts of Japan M-723,1988, Vol. 12, No. 269, beschreibt bei einem Auflagerost einen zweiteiligen Stützstift, dessen Oberteil aus einem kegelförmigen Einsatz aus hochschmelzendem Material wie Molybdän oder Wolfram besteht. Die breite Kegelabschrägung und die niedrige Kegelhöhe führen zu einem Rückreflektieren von durch das Lasergerät geschmolzenem, nach unten geschleudertem Material auf die Blechunterseite. Die kegelförmige Nadelspitze weist unten einen Stift auf, der in die eigentliche hohlzylindrische Nadel eingesetzt ist. Der Aufbau ist relativ breit und nicht exakt justierbar. Die verhältnismäßig breite Kegel-Basis ermöglicht aus Platzgründen nicht, auch sehr kleine Blechteile, herab bis unter ein Quadratzentimeter Fläche, stabil durch drei Punkte zu lagern.

Der Erfindung liegt die Aufgabe zugrunde, eine Unterlage für Blech gemäß dem Oberbegriff des Anspruches 1 so auszugestalten, daß die Lebensdauer erhöht und eine Beschädigung der Blechunterseite vermieden wird, insbesondere bei einem bewegbaren Lasergerät über eine ortsfeste BlechUnterlage.

Die Aufgabe wird erfindungsgemäß durch die Merkmale des Anspruches 1 gelöst. Weitere Ausgestaltungen der Erfindung sind in den Unteransprüchen unter Schutz gestellt.

Beim Erfindungsgegenstand wird auf die Auflagebereiche eine Nadel oder ähnliches dünnes Material aufgesetzt. Auf die freien Enden dieser Nadel, welche selbstverständlich alle die gleiche Höhe aufweisen, wird das Blech aufgelegt. Diese Nadeln, die ja massenmäßig nur einen verschwindend kleinen Teil ausmachen, sind aus temperaturbeständigerem Material als die Blechstreifen hergestellt, wie aus Wolfram. Sie weisen selbstverständlich keine Ösen auf, wie etwa Nähnadeln.

Das übrige Material, nämlich für die Blechstreifen, kann aus nichtrostendem Stahl wie Chromnickel-Stahl bestehen. Dies bedeutet allerdings, dass nach längerer Betriebszeit die von der Schnittfuge des bearbeiteten Bleches herausgeblasenen, weggeschleuderten und auf den Blechstreifen aufprallenden sehr heissen, durch den Schneidevorgang erhitzten Blechteilchen, nämlich die Laserschneidabfälle, sich an bestimmten Teilen der Blechunterlage, nämlich an den Blechstreifen, festsetzen. Daran können sich im Laufe der Zeit weitere Partikeln aufbauen, etwa mit der Unterlage verschweisst werden, so dass die erhöhte Anordnung der Nadelspitzen über den Auflagebereichen soweit eingeebnet wird, dass, entgegen dem Ziel der Erfindung, wieder Abfall-Partikel auf die Blechunterseite auftreffen können, was zu den erwähnten Beschädigungen führen kann.

Diese Langbetrieb-Probleme können überraschenderweise durch eine geeignetere Materialwahl weitgehend verhindert werden. Dieses Material soll erheblich unterschiedlich vom Material des bearbeiteten Bleches sein, das üblicherweise für den vorgesehenen Haupteinsatzzweck aus Edelstahl beziehungsweise Chromnickel-Stahl bestehen kann. Dieses Material soll so gewählt werden, dass es mit den heissen auftreffenden Blechpartikeln der Laser-Schnittfuge keine chemische und/oder physikalische Verbindung eingeht, etwa anschmilzt, sich anschweisst etc..

Unter Umständen besteht zwischen den gewählten Materialien für die Blechstreifen der Blechunterlage und für das bearbeitete Blech ein bestimmter Zusammenhang im Hinblick auf das Periodensystem der Elemente. überraschenderweise zeigte sich die Wahl eines erheblich weicheren Materiales mit erheblich niedrigerem Schmelzpunkt als Blechunterlage, wesentlich höherer Wärmeleitfähigkeit und möglichst hoher spezifischer Wärmekapazität, wie Kupfer bei Chromnickel-Stahl, als besonders vorteilhaft. Die Chromnickel-Abfallteilchen verbinden sich nicht mit der Kupferunterlage, sondern fallen einfach ab.

Erwähnt sei ja in diesem Zusammenhang, dass die Bearbeitungszeit eines Laser-Schneidegerätes selbstverständlich mit der elektrischen Leistung desselben absinkt, und dass dadurch schneller dickere Bleche bearbeitet werden können. Dies hat aber auch einen entsprechenden Anstieg von dickeren, heissen, aus der Schnittfuge herausgeblasenen und auf die Blechunterlage auftreffenden Blechteilchen als Laser-Schneideabfälle zur Folge. Die erläuterte Problematik steigt somit mit zunehmend eingesetzten Laser-Schneidegeräten höherer Leistungskraft und mit dickeren zu bearbeitenden Blechen an.

Die auf die integrierten Auflagebereiche aufgesetzten Nadeln ragen etwa ein bis zehn Zentimeter von den Auflagebereichen nach oben, vorzugsweise zweieinhalb bis dreieinhalb Zentimeter. Dieser Abstand reicht in der Regel aus, um sicher eine Beschädigung der Blechstreifen auszuschließen, und zwar nicht nur der vertieften Furchen, sondern auch der höheren Auflagebereiche. Diese Bereiche sind darüberhinaus auf den minimal erforderlichen Flächenbereich beschränkt, um eine sichere definierte Lagerung der einzelnen Nadeln in gleicher Höhe zu ermöglichen.

Bei einem Ausführungsbeispiel der Erfindung wird folgender Aufbau vorgesehen:

An einem unteren Befestigungsträger zur Befestigung an einem Unterlagentisch wird ein Streifen befestigt, der oben um 360° nach unten umgebogen wird, so daß sich zwei Blechschenkel ergeben. Dieser enthält oben die breiten vertieften Furchen und die schmalen erhöhten integrierten Auflagebereiche für die Nadeln. In den Auflagebereichen ist eine obere Durchtrittsöffnung für die Nadel vorgesehen, die zwischen den beiden umgebogenen Blechschenkeln verläuft. In diesen Durchschnittsöffnungen ist eine gemeinsame durchgehende äußere Führung für alle Nadeln vorgesehen.

Unterhalb der gemeinsamen äußeren Führung ist eine gemeinsame innere Führung vorgesehen, welche auch in einer Richtung senkrecht zur Richtung der äußeren Führung eine Justierung der Nadeln bewirkt. Für die Erzielung eines definierten Anschlages ist weiterhin ein unterer gemeinsamer Anschlag für alle Nadeln vorgesehen. Durch je eine seitliche öffnung an den beiden Blechschenkeln unterhalb jeder Nadel im Bereich des Anschlages ist eine abgebrochene oder defekte Nadel entnehmbar und ersetzbar.

Die Nadeln sind einstückig, massiv ausgebildet und in üblicher Weise oben an der Auflagefläche spitz zulaufend. Sie sind extrem schmal und so lang, dass von ihnen kein durch den Laser-Schneidevorgang gespritztes Blechmaterial zurück nach oben auf die Blechunterseite gelangen kann. Der Durchmesser der Nadeln liegt etwa zwischen eins und drei Millimetern.

Die speziell ausgebildeten Auflagebereiche mit dazwischenliegenden vertieften Furchen und die dünnen Nadeln ermöglichen eine extrem hohe Nadeldichte. Dies bedeutet, dass auch bei sehr kleinen Flächenausschnitten herab bis zu einem Quadratzentimeter und darunter eine stabile Drei-Punkt-Auflage ermöglicht wird. Das unerwünschte Abbrechen des Blechausschnittes am letzten Schneidebereich, was zu einer unsauberen Rissfläche an diesem Punkt führt, wird dadurch vermieden.

Die Form der Auflagebereiche, vertieften Furchen und Nadeln ist vorzugsweise derart, dass seitlich eingreifende Greifer die ausgeschnittenen Blechteile nach oben abheben und auf übliche oder auch spezielle Weise in einen Behälter entleeren können.

Obwohl die Unterlage für alle Bleche und unterschiedliche Anwendungszwecke geeignet ist, wird sie bevorzugt bei Einrichtungen mit ortsfester Unterlage für das Blech und einem darüber angeordnetem Lasergerät eingesetzt, das über Steuereinrichtungen horizontal in zwei zueinander senkrechten Richtungen steuerbar ist.

Ein Ausführungsbeispiel der Erfindung ist in der Zeichnung dargestellt. Es zeigt:
Figur 1 das Gesamtschema einer aus einer Anzahl von parallel zueinander angeordneten Blechstreifen bestehenden Unterlage, auf welche das Blech aufgelegt wird, und über welchem das Lasergerät angeordnet ist,
Figur 2 eine perspektivische Darstellung eines einzelnen Blechstreifens in vergrößerter Darstellung,
Figur 3 den Querschnitt durch den in Figur 2 dargestellten Blechstreifen entlang der Linie A-A,
Figur 4 den Längsschnitt durch den in Figur 2 dargestellten Blechstreifen entlang der Linie B-B,
Figur 5 die getrennten gemeinsamen Teile, nämlich den oben angeordneten gemeinsamen äußeren Halter, den darunter angeordneten inneren Halter, durch den die Nadel hindurchgeht, und den unten angeordneten gemeinsamen Befestigungsträger für jeden Blechstreifen.

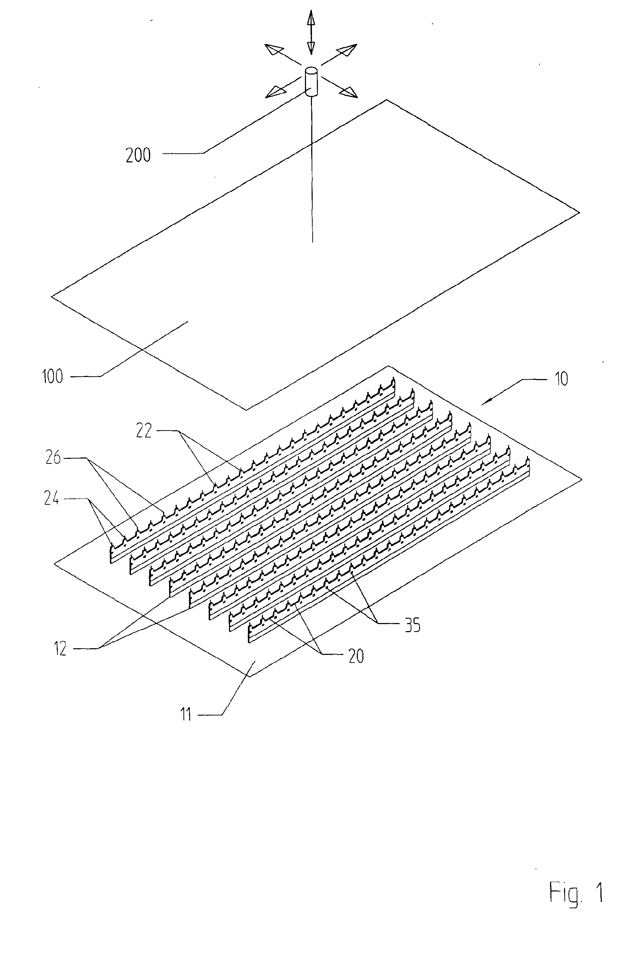

In Figur 1 ist die Gesamtunterlage für die einzelnen Blechstreifen mit 11 bezeichnet, darauf sind senkrecht parallele einzelne Blechstreifen 12 angeordnet, die im wesentlichen aus breiten Furchen 20, erhöhten schmalen Auflagebereichen 22 und darauf aufgesetzten einzelnen schmalen Nadeln aus hochtemperaturfestem Material, vorzugsweise Wolfram, bestehen und mit 24 bezeichnet sind. Die obere Begrenzung der Nadeln 24, auf welchen das Blech aufliegt, ist mit 26 bezeichnet. Unterhalb jeder Nadel 24 ist im Bereich eines gemeinsamen Anschlages für alle Nadeln an jedem der beiden Blechstreifen 12 je eine seitliche Entnahmeöffnung 35 für eine defekte Nadel angeordnet. Die gesamte Blechunterlage ist mit 10 bezeichnet.

Oberhalb eines aufliegenden Bleches 100 ist ein Schneide-Lasergerät 200 schematisch dargestellt, welches auf das Blech optisch fixiert ist und aufgrund von Steuereinrichtungen in Pfeilrichtung sowie in einer hierzu senkrechten Richtung bewegbar ist.

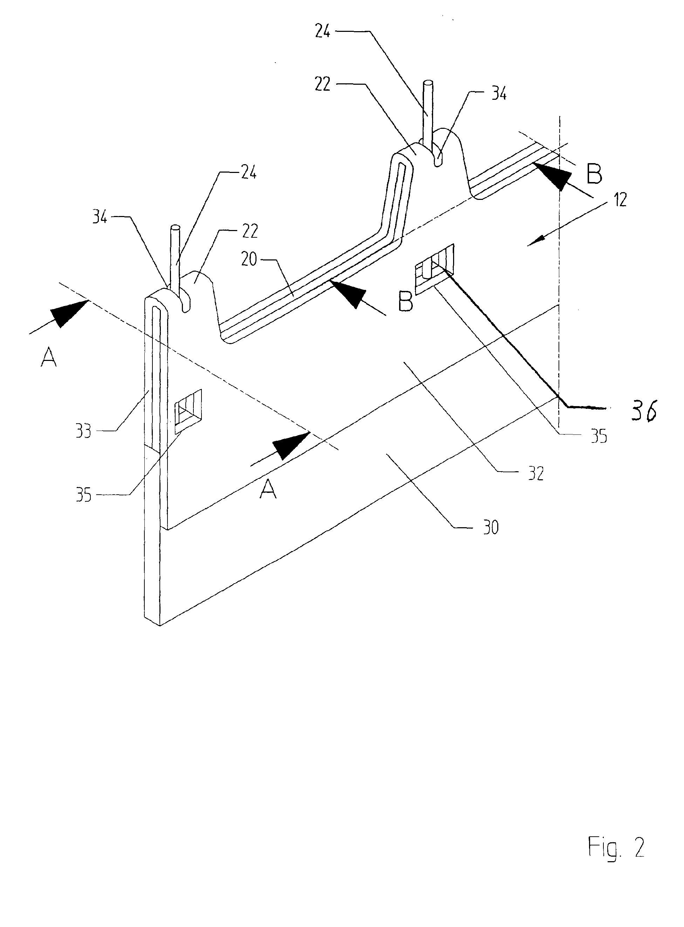

Figur 2 zeigt den unteren Befestigungsträger 30, an den ein Streifen befestigt ist, der oben um 360° umgebogen ist, so daß sich zwei sich gegenüberliegende Blechschenkel 32, 33 ergeben. Durch eine im Vergleich zum Nadeldurchmesser große rechteckige seitliche öffnung 35 dieser Blechschenkel unterhalb jeder Nadel 24 im Bereich eines gemeinsamen Anschlages 36 sind abgebrochene Nadeln 24 herausnehmbar und ersetzbar. In dem einzelnen Blechstreifen 12 sind die breiten vertieften Furchen 20 und die dazwischenliegenden schmalen erhöhten Auflagebereiche 22 erkennbar. In den Auflagebereichen 22 ist jeweils eine Durchtrittsöffnung 34 für die Nadel 24 vorgesehen. Im unteren Abschnitt des Blechstreifens 12 ist ein gemeinsamer Anschlag 36 für die einzelnen Nadeln 24 vorgesehen.

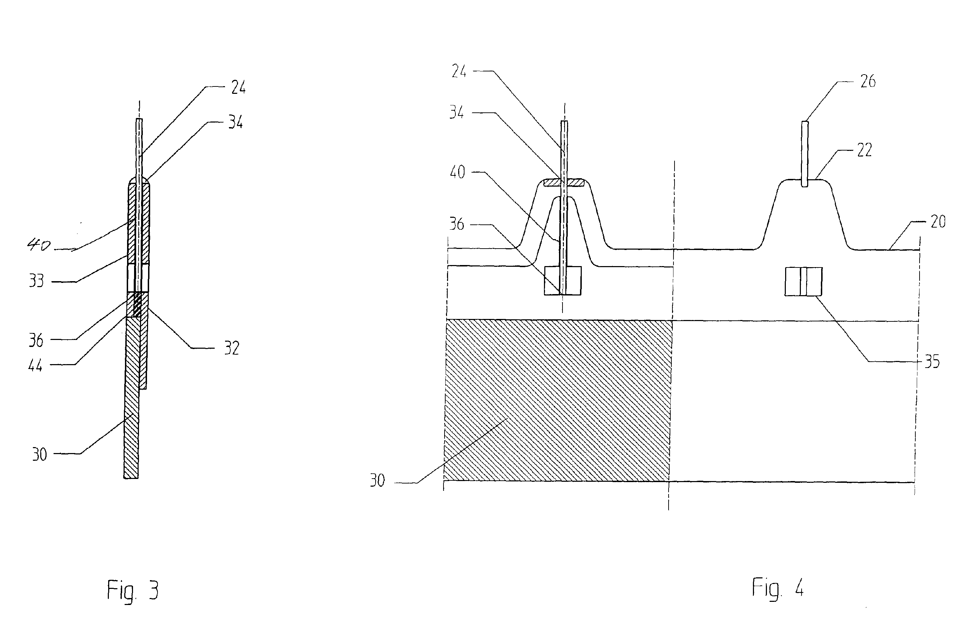

Der Querschnitt von Figur 3 entlang der Linie A-A von Figur 2 zeigt den unteren Befestigungsträger 30, die beiden seitlichen Blechschenkel 32 und 33, die obere öffnung 34 und die in diese eingesetzte Nadel 24, deren unteres Ende an einem gemeinsamen Anschlag 36 aufliegt, sowie eine innere Führung 40, 44 für jede Nadel 24.

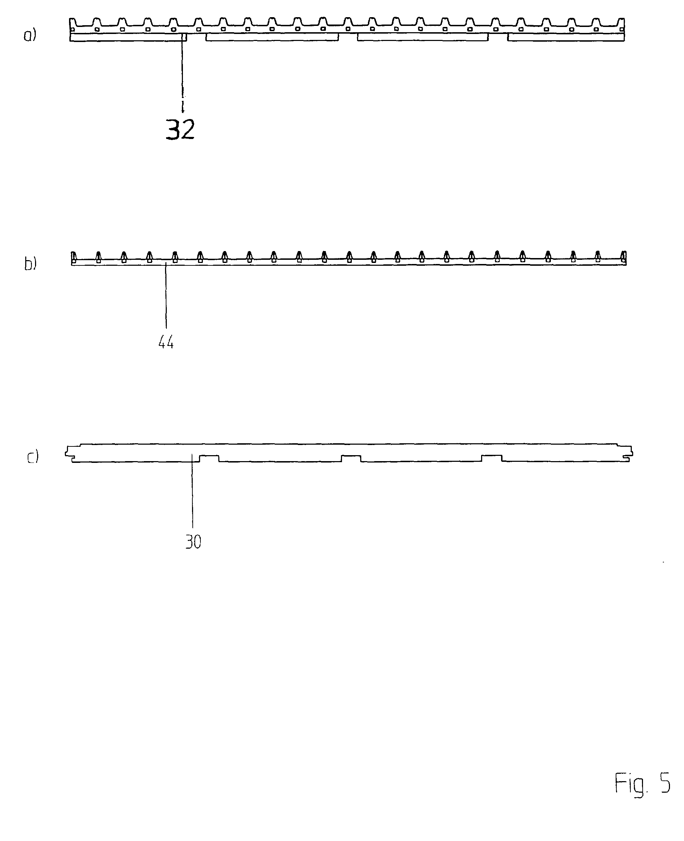

Im Längsschnitt von Figur 4 entlang der Linie B-B von Figur 2 sind gleiche Teile mit gleichen Bezugszeichen versehen. Insbesondere ist dort die obere Durchtrittsöffnung 34 für jede Nadel zu sehen, sowie die darunter angeordnete innere Führung 40, durch welche ebenfalls die Nadel 24 bis zum unteren Anschlag 36 hindurchgeführt und senkrecht justiert ist. Weiterhin ist unterhalb jeder Nadel 24 im Bereich des gemeinsamen Anschlages 36 eine rechteckige Entnahmeöffnung 35 für eine defekte Nadel angeordnet.

Figur 5 zeigt in der oberen Zeile a) einen Blechstreifen 32 von der Seite, in der mittleren Zeile b) ein inneres zwischen die zwei Blechstreifen 32, 33 einzusetzendes Führungsteil 44, in der unteren Zeile c) den unteren Befestigungsträger 30 jedes Unterlagen-Blechstreifens 12. Die drei Streifen a), b), c) werden zu einem einheitlichen Blechstreifen 12 zusammengefügt und mit Nadeln 24 bestückt.

## Patentansprüche

1. Unterlage (10) für Blech (100), das durch ein über dem Blech angeordnetes und auf das Blech fokussiertes Lasergerät (200) durchtrennt wird, mit Bewegungseinrichtungen zwischen Lasergerät und Blech beziehungsweise Unterlage,
wobei die Unterlage aus im wesentlichen senkrecht befestigten parallelen Reihen von gleichen schmalen Blechstreifen (12) besteht, welche jeweils zwischen vertieften Furchen (20) erhöhte integrierte Auflagebereiche (22) für das Blech (100) aufweisen,
**dadurch gekennzeichnet**,
a) daß auf die integrierten Auflagebereiche (22) einstückige, massive schmale spitze Nadeln (24) aufgesetzt werden, deren obere freie Enden Auflagepunkte (26) für das aufgelegte Blech (100) bilden,
b) daß die Nadeln (24) aus erheblich temperaturbeständigerem Material als die übrige Unterlage bestehen,
c) dass jede der schmalen, temperaturbeständigen Nadeln so deutlich über die Auflagebereiche (22) nach oben ragt, dass keine Beschädigung des weniger temperaturbeständigen Materiales derselben und keine Verschmutzung der Unterseite des Bleches (100) durch den Laser-Schneidevorgang erfolgt,
d) dass das untere Ende jeder der schmalen, temperaturbeständigen Nadeln (24) in einer oberen Durchtrittsöffnung (34) der erhöhten integrierten Auflagebereiche (22) für das Blech (100) gehaltert ist.

2. Unterlage nach Anspruch 1, **dadurch gekennzeichnet, daß** als temperaturbeständigeres Material Wolfram eingesetzt wird.

3. Unterlage nach Anspruch 1 oder 2, **dadurch gekennzeichnet, daß** die vertieften Furchen (20) den wesentlichen Teil der Blechstreifen (12) umfassen, und daß die erhöhten integrierten Auflagebereiche (22) auf den konstruktiv zur Halterung der Nadeln (24) erforderlichen Bereich beschränkt sind.

4. Unterlage nach einem der Ansprüche 1 bis 3, **dadurch gekennzeichnet, daß** die integrierten Auflagebereiche (22) eine definierte Lagerung für jede der Nadeln (24) hinsichtlich oberer Begrenzung der Auflagepunkte (26) und senkrechter Ausrichtung in beiden Richtungen innerhalb der Blechstreifen (12) enthalten.

5. Unterlage nach einem der Ansprüche 1 bis 4, **gekennzeichnet durch** folgenden Aufbau jedes Blechstreifens:
a) einen unteren Befestigungsträger (30) zur Befestigung an einem Unterlagentisch (11),
b) einen oben um 360° zu zwei Blechschenkeln (32, 33) umgebogenen Streifen, der mit dem unteren Befestigungsträger (30) verbunden ist,
c) der oben die breiten vertieften Furchen (20) und die schmalen erhöhten integrierten Auflagebereiche (22) aufweist,
d) wobei in den Auflagebereichen (22) jeweils eine obere Durchtrittsöffnung (34) für eine Nadel (24) vorgesehen ist, die zwischen den beiden umgebogenen Blechschenkeln (32, 33) in einer Führung geführt ist,
e) wobei unterhalb dieser Führung eine (gemeinsame) zweite innere Führung (40) für die Nadeln (24) in einer zur ersten Führungsrichtung senkrechten Richtung vorgesehen ist,
f) wobei unten zwischen den beiden Blechschenkeln (32, 33) ein gemeinsamer Anschlag (36) für das untere Ende der Nadeln (24) vorgesehen ist,
g) derart, daß jede Nadel (24) zur Einsparung von temperaturbeständigerem Material deutlich über die Auflagebereiche (22) senkrecht nach oben ragt,
und keine Beschädigung des weniger temperaturbeständigen Materiales und **dadurch** Verschmutzung des Bleches (100) erfolgt,
h) wobei an den beiden Blechschenkeln (32, 33) im Bereich des Anschlages je eine seitliche Öffnung (35) zur Entnahme und zum Ersetzen einer abgebrochenen oder defekten Nadel (24) vorgesehen ist.

6. Unterlage nach Anspruch 5, **dadurch gekennzeichnet, daß** die Nadeln 1 bis 8 cm, vorzugsweise 2,5 bis 3,5 cm, aus den Auflagebereichen (22) nach oben vorstehen.

7. Unterlage nach einem der Ansprüche 1 bis 6, **dadurch gekennzeichnet, dass** der Durchmesser der einzelnen Nadeln eins bis drei Millimeter beträgt.

8. Unterlage nach einem der Ansprüche 1 bis 7, **dadurch gekennzeichnet, dass** auf einer Fläche von einem Quadratzentimeter mindestens drei Auflagepunkte zur stabilen Drei-Punkt-Auflage entsprechend kleiner Flächen-Ausschnitte vorgesehen werden können.

9. Unterlage nach einem der Ansprüche 1 bis 8, **gekennzeichnet durch** eine derartige Formgebung und Anordnung der vertieften Furchen (20) der integrierten erhöhten Auflagenbereiche (22) und der auf die Auflagenbereiche aufgesetzten Nadeln (24), dass die einzelnen unten aufliegenden Blechausschnitte von unten **durch** seitliche Greifer angehoben und abgezogen werden können.

10. Verwendung der Unterlage nach einem der Ansprüche 1 bis 9 bei einer Einrichtung mit ortsfester Unterlage für das Blech (100) und darüber angeordnetem über Steuereinrichtungen horizontal bewegbarem Lasergerät (200).

11. Unterlage nach einem der Ansprüche 1 bis 10, **dadurch gekennzeichnet, dass** als Material für die Blechstreifen Edelstahl eingesetzt wird.

12. Unterlage nach einem der Ansprüche 1 bis 10, **dadurch gekennzeichnet, dass** als Material für die Blechstreifen ein Material eingesetzt wird, das mit dem von der Laser-Schnittfuge des Bleches weggeschleuderten aufprallenden heissen Blechteilchen keine chemische und/oder physikalische Verbindung, insbesondere keine Schweißverbindung, eingeht.

13. Unterlage nach Anspruch 12, **dadurch gekennzeichnet, dass** das Material für die Blechstreifen erheblich weicher ist und/oder einen erheblich niedrigeren Schmelzpunkt als das bearbeitete Blechmaterial aufweist.

14. Unterlage nach Anspruch 12 oder 13, **dadurch gekennzeichnet, dass** das Material für die Blechstreifen eine wesentlich höhere Wärmeleitfähigkeit als das bearbeitete Blechmaterial und eine möglichst hohe spezifische Wärmekapazität aufweist.

15. Unterlage nach Anspruch 13, **dadurch gekennzeichnet, dass** als Material für die Blechstreifen Kupfer eingesetzt wird,
wobei als Blechmaterial Edelstahl oder Chromnickel-Stahl eingesetzt wird.
